# EUROPEAN PATENT APPLICATION

(11) **EP 4 648 239 A1**
(43) Date of publication of application: **12.11.2025**
(21) Application number: 25174305.0
(22) Date of filing: 05.05.2025
(51) Int. Cl.: H02G 3/32

(54) **ANGLED ANCHOR MOUNTS**

(30) Priority: 08.05.2024 US 202463644353 P; 11.04.2025 US 202519177448
(71) Applicant: HellermannTyton Corporation, Milwaukee, WI 53224 (US)
(72) Inventor: Klos, Scott G., Grafton, Wisconsin (US); Cors, Mark W., St. Francis, Wisconsin (US)
(74) Representative: Hernandez, Yorck

(57) **Abstract**

Disclosed are mounts for the routing of elongated objects from a first route to a second route. In an aspect, a mount includes a bundle connector configured to receive a strap to attach an object to the mount, where the bundle connector includes an arm that defines a notch configured to receive the strap therein.

## Description

### INCORPORATION BY REFERENCE

This application claims the benefit of U.S. Provisional Application No. 63/644,353, filed May 8, 2024, and U.S. Provisional Application No. 63/683,339, filed August 15, 2024, the disclosures of which are incorporated herein by reference.

### BACKGROUND

Various systems use elongated objects, such as cables, hydraulic lines, or wires, to connect components located in different locations. For example, during installation and/or maintenance of the system, a technician might be tasked with physically routing a wire from a machine cabinet, across a bridge, and along a conveyor to connect to a motor.

Adhesive-backed cable tie mounts (CTMs) are commonly used to secure such elongated objects to mounting surfaces during such a routing task. A CTM typically consists of a body for attaching the object, often using a cable tie, and an adhesive backing for adhering to the mount surface. To install the CTM, a release liner is peeled off the adhesive backing and the CTM is pressed onto the desired location. The object can then be attached to the CTM usually by looping a cable tie around the object and through a saddle portion of the CTM.

While individual CTMs offer flexibility in routing, their small adhesive area can pose challenges. Technicians may need to clean the mounting surface and select a flat area for proper adhesion. Furthermore, CTMs in high-stress areas (e.g., curves, sharp turns, moving parts) or when supporting heavy or rigid objects are prone to adhesive failure (delamination). These challenges can make the efficient and secure routing of elongated objects around bends with traditional CTMs difficult.

### SUMMARY

This document describes angled anchor mounts for the routing of elongated objects. In one example implementation, the techniques and apparatuses described include an angled anchor mount that is utilized to guide an object (e.g., bundle of one or more cables) from a first route to a second route, where the first route has a first angular orientation, the second route has a second angular orientations, and the first and second angular orientations are different angular orientations (e.g., the second angular orientation is generally perpendicular to the first angular orientation, the second angular orientation is rotated 90 degrees to the first angular orientation, the second angular orientation is oriented 90° to the first angular orientation).

In another example implementation, the techniques and apparatuses described include a mount with a bundle connector configured to receive a strap to attach an object to the mount, the bundle connector includes an arm that defines a notch configured to receive the strap therein. In a further example implementation, the techniques and apparatuses described include a mount with a curved sidewall configured to guide an object from a first route to a second route along a route path, and a bundle connector configured to receive a strap to attach the object to the mount, where the bundle connector includes an arm that extends from the curved sidewall.

This Summary is provided to introduce simplified concepts of angled anchor mounts for the routing of elongated objects, which are further described below in the Detailed Description and are illustrated in the Drawings. This Summary is not intended to identify essential features of the claimed subject matter, nor is it intended for use in determining the scope of the claimed subject matter.

### BRIEF DESCRIPTION OF THE DRAWINGS

The details of one or more implementations of angled anchor mounts for the routing of elongated objects are described with reference to the following Drawings.
FIG. 1 is a schematic representation of an angled anchor mount.
FIG. 2 is a perspective view of an angled anchor mount.
FIG. 3 is a first side view of the angled anchor mount of FIG. 2.
FIG. 4 is a first end view of the angled anchor mount of FIG. 2.
FIG. 5 is a plan view of the angled anchor mount of FIG. 2.
FIG. 6 is a perspective view of an angled anchor mount.
FIG. 7 is a first side view of the angled anchor mount of FIG. 6.

### DETAILED DESCRIPTION

This document describes angled anchor mounts that are configured for the routing of elongated objects. In one example, an angled anchor mount is utilized to guide an object (e.g., a bundle of one or more cables) from a first route to a second route, where the first route has a first angular orientation, the second route has a second angular orientation, and the first and second angular orientations are different angular orientations (e.g., the second angular orientation is generally perpendicular to the first angular orientation). The second angular orientation is relative to the first angular orientation. The angled anchor mounts described herein reduce and/or eliminate the problems discussed above relating to the utilization of traditional adhesive cable tie mounts in high stress locations and/or for heavy/rigid elongated object bundles.

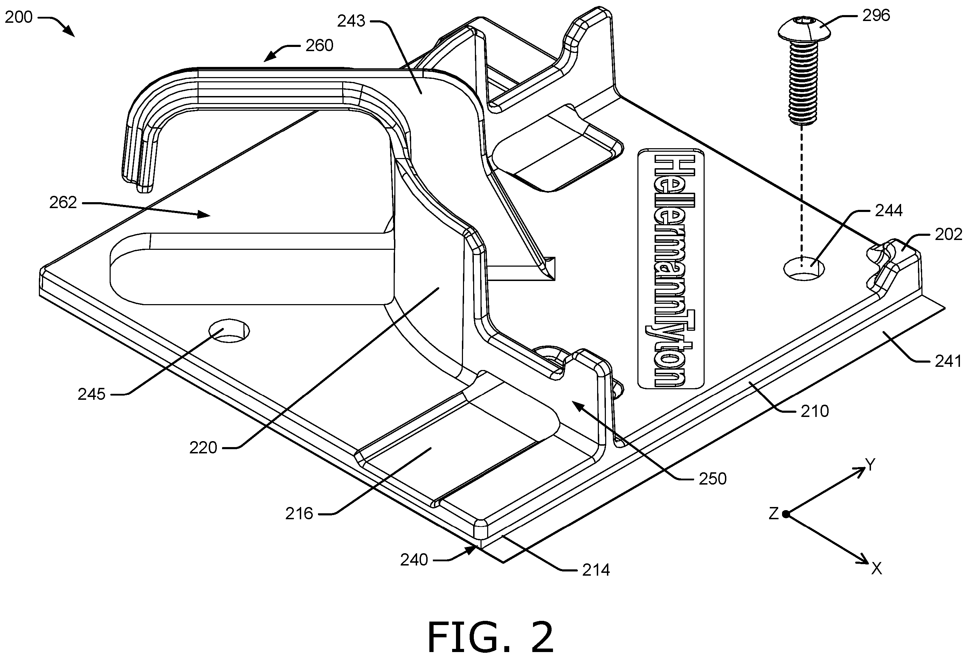

In this description, the first digit(s) of a reference character (e.g., call-out number) may correlate with the first figure number in which the reference character is labeled. For example, reference characters that start with a 2 (e.g., mount 200, bundle connector 250) may represent details first called out with respect to FIG. 2. Further, the same reference characters in different Drawings may identify the same or similar features, elements, and/or parts.

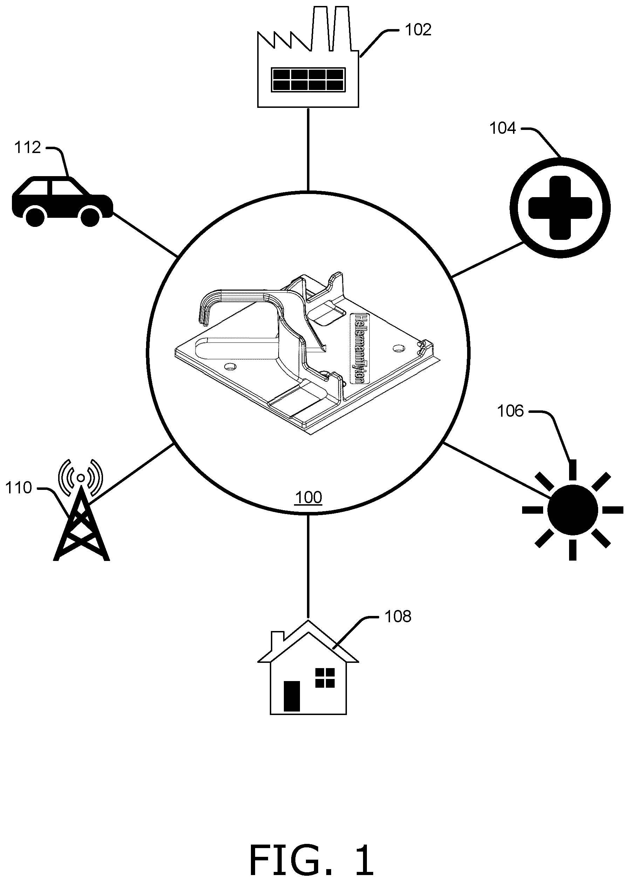

FIG. 1 is a schematic representation of angled anchor mounts 100 that are configured to guide elongated objects (e.g., from a first route to a second route along a route path). As discussed herein, the mounts 100 may have particular application in the Industrial and manufacturing markets 102 (e.g., for guiding electrical cables from a first route to a second route). While this disclosure, including the Drawings, references these markets, the mounts 100 may have application to the guiding of objects from a first route to a second route in other markets, including but not limited to healthcare markets 104, energy and utility markets 106, consumer and commercial markets 108, telecommunications and data infrastructure markets 110, and/or transportation markets 112.

Industrial and manufacturing markets 102 include industrial automation and equipment, control panels, machine building, machinery, electrical enclosures, material handling systems (e.g., conveyors), cooling systems, heavy equipment (e.g., construction and mining machinery), agricultural technology (e.g., farming equipment), chemical (e.g., chemical processing equipment), robotics (e.g., automated robotic systems), original equipment manufacturers (OEMS), mechanical components, and mechanical systems. Healthcare markets 104 include medical equipment and technology, and dental equipment and technology. Energy and utility markets 106 include renewable energy systems (e.g., solar, wind, hydroelectric), power generation and distribution, industrial lighting, and commercial lighting. Consumer and commercial markets 108 include appliances (e.g., home and commercial appliances), heating, ventilation, and air conditioning (HVAC), and consumer electronic devices. Telecommunications and data infrastructure markets 110 include telecommunications (e.g., general telecom services), communications (e.g., communication systems and equipment), internet service providers (ISPs), cable television companies (CATV), infrastructure for data storage and processing (e.g., data centers), broadband (e.g., broadband internet services), and datacom (e.g., data communications equipment). Transportation markets 112 include manufacturing and components for vehicles, trucks, automobiles, rail conveyances (e.g., trains), marine craft (e.g., ships, boats), aircraft, and aerospace.

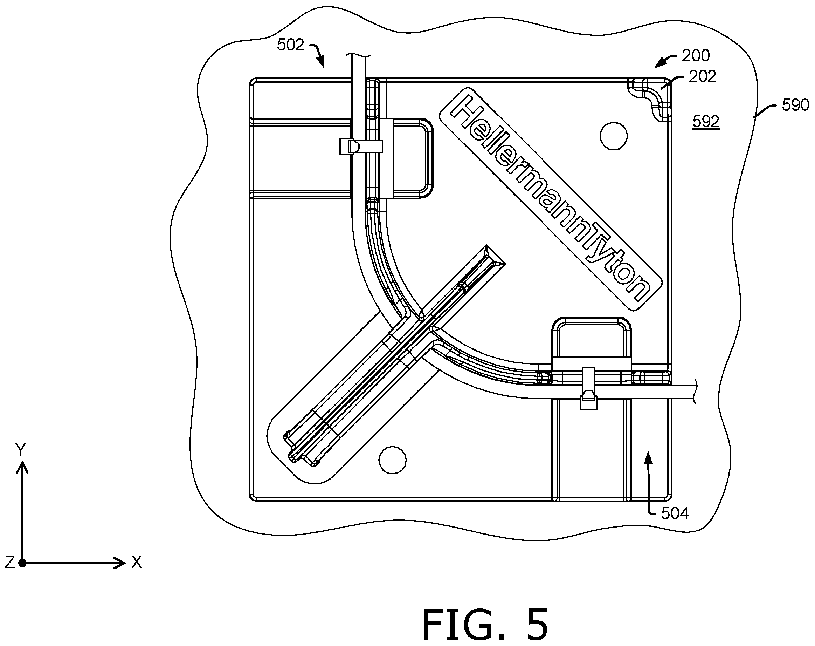

Referring now to FIGS. 2-5, illustrated is an angled anchor mount 200 (mount 200) that is configured for guiding elongated objects from a first route to a second route. For example, the angled anchor mount 200 may be utilized to guide a bundle of one or more cables (e.g., cable 370) from a first route 502 to a second route 504. In this way, the angled anchor mount 200 is configured to bend the bundle (cable 370) around a corner. The first route 502 has a first angular orientation, the second route 504 has a second angular orientation, and the first and second angular orientations are different angular orientations (e.g., the second angular orientation is generally perpendicular (e.g., rotated 90 degrees) to the first angular orientation). In such a configuration, the bundle (e.g., cable 370) enters at a first angle and leaves the mount at a right angle to the first angle. In implementations, the first and second angular orientations can be at any angle relative to one another (e.g., at any angle from 0° to 360° and all angles in between).

As used herein, the terms "object" and "elongated object" are used to refer to all types and forms of elongated objects, including, but not limited to cables, wires, wire harnesses, hydraulic lines, pneumatic lines, optical fiber, textiles, plastic, pipes, tubing, conduits, elongated articles, and bundles or one or more of the same. While in this description and the Drawings, a cable (e.g., cable bundle) is frequently used as an example object, other types of objects may be substituted. A mount may be configured to receive a strap that is utilized to attach the object to the mount. As used herein, the term "strap" is used to refer to all types and forms of strapping materials, including but not limited to cable ties, plastic bands, metal bands, string, twine, wire, hook-and-loop fastener straps, and the like. As used herein, the term "workpiece" is used to refer to machines, cabinets, housings, frames, frame rails, enclosures, vehicle chassis, panels, rails, support beams, cable routing channels, conveyor channel assemblies, and the like. A workpiece may include a mount surface and/or a mount aperture defined therein (e.g., a slot, a channel, a bore, a threaded hole), and the like.

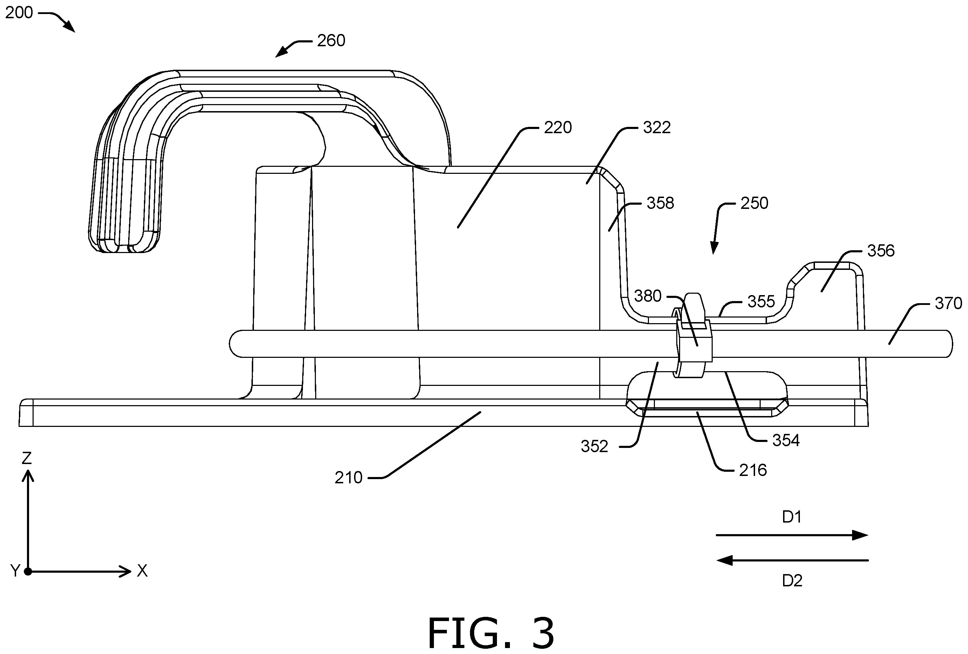

For clarity, a Cartesian coordinate system is used and is labeled in FIGS. 2-5. The coordinate system includes three dimensions, namely, an X-axis, a Y-axis, and a Z-axis. Each of the three axes is orthogonal to the other two axes. The X-axis and the Y-axis define a horizontal plane, with the Z-axis in a vertical direction. While the origin of the coordinate system may be placed at any point on or near the components of the angled anchor mount 200, for the purposes of description, the axes of the coordinate system are always disposed along the same directions from figure to figure, unless indicated otherwise. In some examples, reference may be made to dimensions, angles, directions, relative positions, and/or movements associated with one or more components of the angled anchor mount 200 with respect to the coordinate system. For instance, the length of an angled anchor mount 200 may be defined as a dimension along the X-axis, the width of the angled anchor mount 200 may be defined as a dimension along the Y-axis, and a thickness or depth of the angled anchor mount 200 may be defined as a dimension along the Z-axis of the coordinate system. The angled anchor mount 200 enables the positioning of the bundle (e.g., cable 370, object 370) within the X-Y plane, as illustrated in FIGS. 3-5.

The mount 200 includes at least one bundle connector (e.g., bundle connector 250, bundle connector 450) that is configured to connect a bundle (e.g., cable 370) to the mount 200. For example, the bundle connector is configured to receive a strap (e.g., strap 380, strap 480) to attach the object (e.g., cable 370) to the mount 200. The bundle connector 250 extends from at least one of the base portion 210 or a curved sidewall 220 of the mount 200. In implementations, a bundle connector may be omitted.

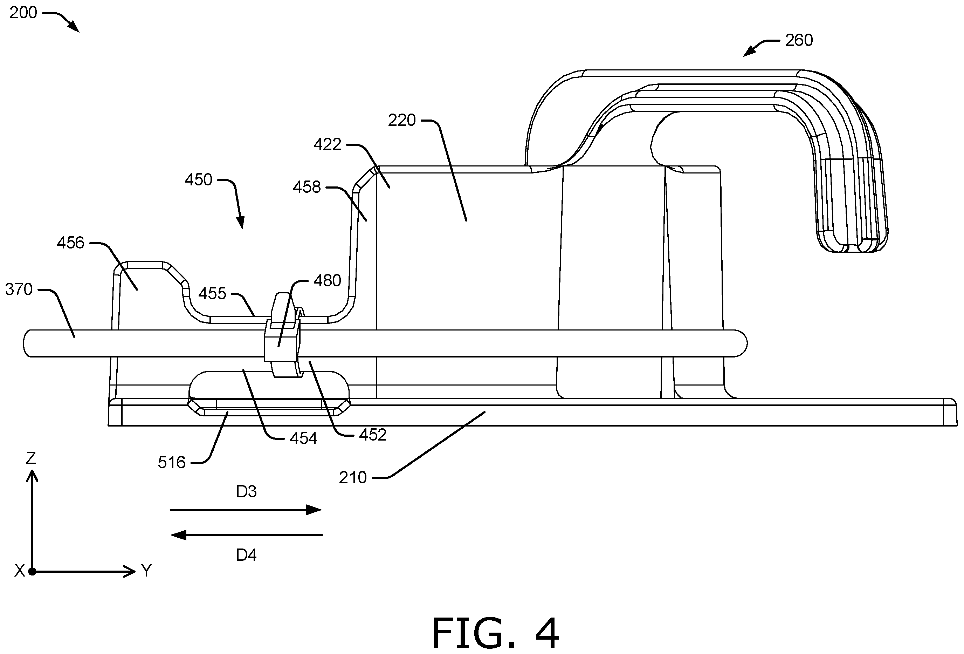

The bundle connector 250 may define a first limiter portion 356 that is configured to limit a lateral movement of the strap 380 on the arm 352 in a first direction (D1). The bundle connector 250 may define a second limiter portion 358 that is configured to limit the lateral movement of the strap 380 on the arm 352 in a second direction (D2), the second direction opposite the first direction. In this way, a strap 380 that is installed on the bundle connector 250 may be prevented from sliding off the bundle connector 250. The bundle connector 250 may be a first bundle connector and mount 200 may include a second bundle connector 450. The second bundle connector 450 may be similar to the first bundle connector 250 illustrated in FIGS. 2 and 3 and described above. Thus, the second bundle connector 450 may be configured to receive a second strap 480 to attach the cable 370 to the mount 200. The second bundle connector 450 may include a second arm 452, a second lower notch 454, a second upper notch 455, a first limiter portion 456, and a second limiter portion 458, as illustrated in FIG. 4. The first limiter portion 456 may limit a lateral movement of the strap 480 on the arm 452 in a third direction (D3) and the second limiter portion 458 may limit the lateral movement of the strap 480 on the arm 452 in a fourth direction (D4), the fourth direction opposite the third direction. In this way, a strap 480 that is installed on the bundle connector 450 may be prevented from sliding off the bundle connector 450. In implementations, a limiter portion may be omitted.

In aspects, the mount 200 includes a base portion 210 that has a top side 212 opposite a bottom side 214. It should be understood that the top side and the bottom side should not be limited to any specific orientations. In the aspect illustrated in FIGS. 2-4, the bundle connector (e.g., bundle connector 250, bundle connector 450) extends from the base portion 210. The base portion 210 may have a square shape (e.g., as illustrated in FIGS. 2-5) or any other shape. In implementations, a base portion may be omitted. The base portion 210 may define a finger grip 202 that is configured for grasping by a technician during an installation process. The finger grip 202 extends from the top side 212 of the mount 200.

The top side 212 of the base portion 210 may define a channel (e.g., channel 216, channel 516) that extends under an arm (e.g., arm 352, arm 452) of the bundle connector (e.g., bundle connector 250, bundle connector 450). The channel may be configured to guide a strap (e.g., strap 380, strap 480) through a lower notch (e.g., lower notch 355, lower notch 455) and under the arm (e.g., arm 352, arm 452) of the bundle connector (e.g., bundle connector 250, bundle connector 450). A technician may assemble the strap to the mount 200, for example, by passing a portion of the strap (e.g., an end of a cable tie) through a lower notch, wrapping the strap around the object, and tensioning the strap around the object (e.g., fastening a tail of a cable tie to a head of a cable tie). In implementations, a channel may be omitted.

The mount 200 includes a curved sidewall 220 that extends from (e.g., may be integral to) the base portion 210. The curved sidewall 220 may be arc shaped. The curved sidewall 220 is configured to guide the cable 370 from a first route 502 to a second route 504 along a route path therebetween. In the aspect illustrated in FIGS. 2 and 3, the first route 502 is generally perpendicular to the second route 504. The first route 502 has a first angular orientation and the second route 504 has a second angular orientation. The first and second angular orientations are different angular orientations (e.g., the second angular orientation is generally perpendicular (e.g., rotated 90 degrees) to the first angular orientation). In the aspect illustrated in FIGS. 2 and 3, the base portion 210 is planar and defines a base plane, with the curved sidewall 220 extending generally orthogonally to the base plane. In implementations, a curved sidewall may be omitted.

In aspects, the curved sidewall 220 defines a routing corner for guiding an object (e.g., cable 370) from the first route 502 to the second route 504. In implementations, the angled anchor mount is a right-angle (90° turn) anchor mount. The curved sidewall 220 may be configured as a wire bend radius guide that defines a routing corner for the routing of wire. For example, the curved sidewall may conform to a standard minimum bend radius (e.g., one-inch radius (~2.54 cm radius)) for copper wiring used for industrial automation applications.

In the aspect illustrated in FIGS. 2-5, the bundle connector (e.g., bundle connector 250, bundle connector 450) includes an arm (e.g., arm 352, arm 452) that is configured to support the cable 370 on the mount 200. In implementations, an arm may be omitted. For example, the arm 352 may be configured to attach to the cable 370 via the strap 380 (e.g., a cable tie). In this way, the arm 352 may be configured as a cable tie arm. The arm 352 may define at least one notch that is configured to receive the strap 380. In the aspect illustrated in FIGS. 2 and 3, the arm 352 includes an upper notch 355 and a lower notch 354 (e.g., second notch 354). The arm 352 may be spaced apart from a base portion 210 of the mount 200 to define the lower notch 354. The arm 352 may extend from the curved sidewall 220 (e.g., from an end 322 of the curved sidewall 220).

In further example, illustrated in FIG. 4, the arm 452 may be configured to attach to the cable 370 via the strap 480 (e.g., a cable tie). In this way, the arm 452 may be configured as a cable tie arm. The arm 452 may define at least one notch that is configured to receive the strap 480. In the aspect illustrated in FIG. 4, the arm 452 includes an upper notch 455 and a lower notch 454 (e.g., second notch 454). The arm 452 may be spaced apart from a base portion 210 of the mount 200 to define the lower notch 454. The arm 452 may extend from the curved sidewall 220 (e.g., from an end 422 of the curved sidewall 220).

The bottom side 214 of the base portion 210 may include a mount portion 240 that is configured to connect the base portion 210 to a workpiece 590. The mount portion 240 may include an adhesive portion 242 that is configured to adhere to the mount surface 592 of the workpiece 590. The adhesive portion 242 may include a pre-applied adhesive strip (e.g., a double-sided adhesive tape, a double-stick adhesive foam, a pressure-sensitive adhesive tape, and the like) that is covered by a release liner 241. To install the mount 200 on the workpiece 590, the release liner 241 is peeled off the adhesive strip and the adhesive portion 242 is then applied to the mount surface 592 to adhere the base portion 210 to the mount surface 592. In implementations, an adhesive portion may be omitted. In other aspects, the mount portion 240 may include at least one fastener aperture (e.g., fastener aperture 244, fastener aperture 245) that is defined through the base portion 210 (e.g., from the bottom side 214 to the top side 212). The fastener aperture is configured to receive, therethrough, a fastener 296 to attach the base portion 210 to the mount surface 592. In implementations, a fastener aperture may be omitted.

The mount portion 240 may include any suitable structure to mount to the workpiece 590, some additional examples of which include a fastener (e.g., a blind hole fastener, a clamp fastener, a clamp portion, a mechanical fastener, a T-nut fastener for a T-slot metal frame, a masonry mount, a push mount, a swivel mount, an arrowhead fastener, a fir-tree fastener, an edge-clip mount, a clip fastener, cradle portion, a twist-lock fastener configured for receipt into the slot of a rail, a weld stud mount, a cable attachment, a hose attachment), a magnet, a friction fit, and the like, and combinations thereof (e.g., a fastener and an adhesive fastener, an adhesive fastener and a magnet).

In aspects, the mount 200 includes a bundle retainer 260 that is configured to retain or contain a bundle of one or more objects (e.g., cable 370) during a routing process. The bundle retainer 260 may be centrally located on the base portion 210 and may extend from the curved sidewall 220. The bundle retainer may include an extension portion that extends towards the base portion 210 (e.g., as a hook). The bundle retainer 260 may be spaced apart, on the mount 200, from the bundle connector(s). The bundle retainer 260 and the curved sidewall 220 may define a cradle 262 therebetween, with the cradle 262 configured to receive the cable 370. In this way, the bundle retainer 260 may function as a wire retention hook. The bundle retainer 260 is configured to retain the cable 370 in the cradle 262. In implementations, a bundle retainer may be omitted.

In this way, the bundle retainer 260 may passively hold the objects in place like a "third hand" during a build process (e.g., while a technician guides cables through the mount). For example, the bundle retainer 260 may be configured to loosely retain the cables on the mount until the technician applies one or more cable ties to the bundle connector(s) to hold the cables in place on the mount. The technician can then let go of the cables placed on the curved sidewall, which may enable the technician to use both hands to collect additional cables to route, place cable ties to form bundles, and perform other functions.

The mount 200 may include at least one structural buttress (e.g., buttress 243) that is configured to add strength to the bundle retainer 260 (wire retention hook) and/or the curved sidewall 220. The position of the buttress 243 may guide a technician to position the wires on an appropriate side of the curved sidewall 220.

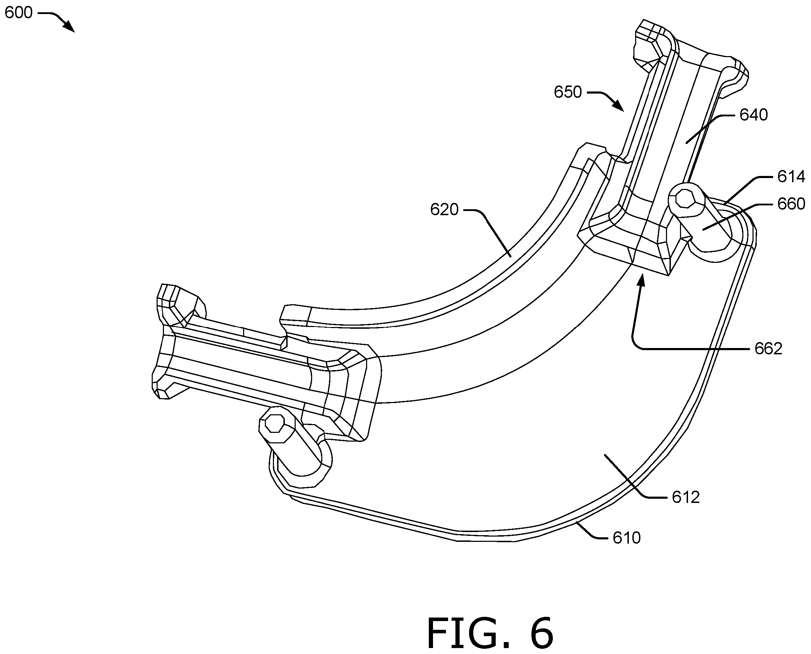

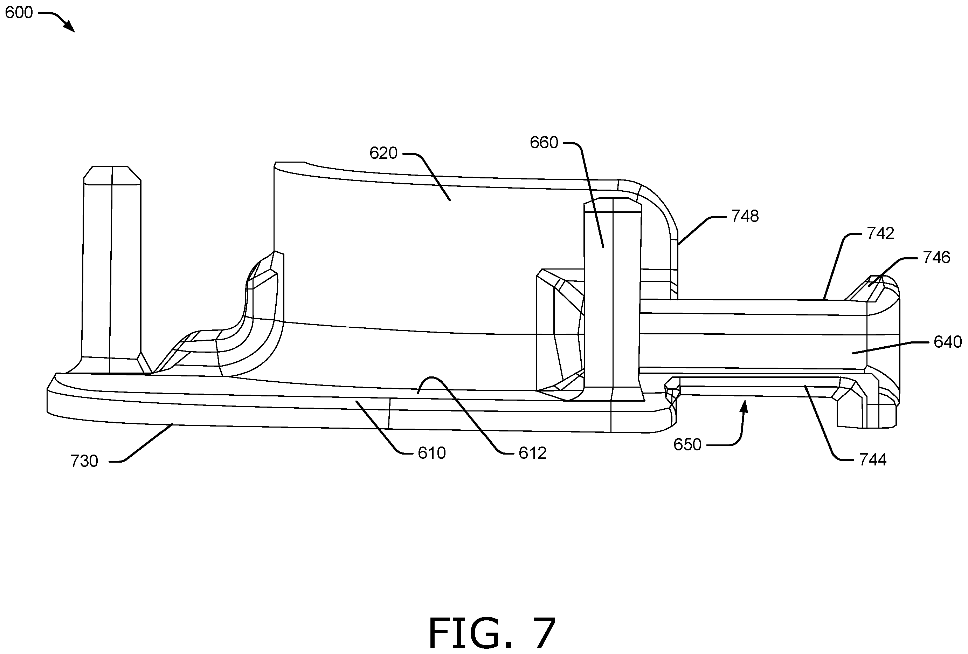

Referring now to FIGS. 6 and 7, illustrated is an angled anchor mount 600 (mount 600) that is configured for guiding objects from a first route to a second route. The mount 600 may be similar to the mount 200 illustrated in FIGS. 2-5 and described above, except as described below. Thus, the mount 600 may include a base portion 610, a top side 612, a curved sidewall 620, a mount portion 730, an arm 640, an upper notch 742, a lower notch 744, a first limiter portion 746, a second limiter portion 748, and a bundle connector 650. The arm 640 may extend past an edge 614 of the base portion 610. The arm 640 may have a length that permits a portion of a cable protector (e.g., spiral wrap, plastic weave) to be fed under the arm 640, and, in this way, the cable protector may be held in place. The mount 600 may further include a post 660 that extends from the base portion 610 adjacent to the bundle connector 650. The post 660 may be spaced apart from the curved sidewall 620 to define a channel 662 that is configured to temporarily hold an object (e.g., a cable) during the guiding of the object through the mount.

In aspects, one or more of the bundle connector, the base portion, the curved sidewall, or the bundle retainer of a mount (e.g., mount 100, mount 200, mount 600) are integrally formed of a suitable material(s) through one or more of an injection-molding process, an extrusion process, an additive manufacturing process (e.g., a fused deposition modeling (FDM) process, a three-dimensional (3D) printing process), or another suitable process. In implementations, one or more of the bundle connector, the base portion, the curved sidewall, or the bundle retainer of a mount (e.g., mount 100, mount 200, mount 600) can be assembled from separate plastic parts and fixed together through welding, solvents, adhesives, and the like.

Examples of materials for an angled anchor mount disclosed herein include, but are not limited to any suitable material, including, but not limited to, a metal (e.g., wire), a polymer (e.g., a polymeric material), and/or a composite. Suitable polymeric materials may include one or more of poly vinyl chloride (PVC), polyamide (PA), polypropylene (PP), polyethylene (PE), polyphenylene sulfide (PPS), polyether ether ketone (PEEK), polyaryletherketone (PAEK), ethylene tetrafluoroethylene (ETFE), polyacetal (POM), polybutylene terephthalate (PBT), ultraviolet stabilized polyacetal (POMUV), acrylonitrile styrene acrylate (ASA), cross-linked thermoplastics, partially cross-linked thermoplastics, higher-temperature resins, ultraviolet (UV) resistant resins, other thermoplastic materials, and the like, and copolymers, blends, or alloys thereof)) as well as fiber reinforced materials. A suitable polymeric material may include one or more additives (e.g., heat stabilizers (e.g., copper iodide), impact modifiers (e.g., polyolefin, urethane, rubber), UV stabilizers (e.g., carbon black, hindered amine light stabilizers (HALS)), flame retardants (e.g., nitrogen-based halogen-free flame retardants, melamine cyanurate, melamine borate, ammonium polyphosphate), colorants, and the like). One or more of the components of the disclosed angled anchor mounts may be formed of the same material as the other components, or of a different material than the other components.

Some additional examples of mounts (e.g., angled anchor mounts) are described in the following Examples.

Example 1. A mount comprising a bundle connector configured to receive a strap to attach an object to the mount, the bundle connector comprising an arm that defines a notch configured to receive the strap therein.

Example 2. The mount of Example 1, further comprising a base portion that includes a top side opposite a bottom side, the bottom side includes a mount portion configured to connect the base portion to a workpiece.

Example 3. The mount of Example 2, wherein the arm is spaced apart from a base portion to define the notch.

Example 4. The mount of Example 2, wherein the bundle connector extends from at least one of the base portion or a curved sidewall.

Example 5. The mount of Example 2, wherein the base portion further comprises a channel defined in the top side, the channel configured to guide the strap under the arm of the bundle connector.

Example 6. The mount of Example 2, wherein the mount portion further comprises at least one of: an adhesive portion configured to adhere to a mount surface of the workpiece to attach the mount portion of the base portion to the mount surface; or a fastener aperture defined through the base portion from the bottom side to the top side, the fastener aperture configured to receive a fastener therethrough to attach the base portion to the mount surface.

Example 7. The mount of Example 2, further comprising a curved sidewall that extends from the base portion, the curved sidewall configured to guide the object from a first route to a second route along a route path.

Example 8. The mount of Example 7, wherein the base portion defines a base plane and the curved sidewall extends generally orthogonally to the base plane.

Example 9. The mount of Example 7, wherein the arm that extends from the curved sidewall, the arm configured to attach to the object via the strap.

Example 10. The mount of Example 9, wherein the arm extends from an end of the curved sidewall.

Example 11. The mount of Example 7, further comprising a bundle retainer, wherein the bundle retainer and curved sidewall define a cradle therebetween, the cradle configured to receive the object, and the bundle retainer configured to retain the object in the cradle.

Example 12. The mount of Example 7, wherein the bundle connector is a first bundle connector, the strap is a first strap, and the mount further comprises a second bundle connector that extends from the base portion, the second bundle connector configured to receive a second strap to attach the object to the mount, the second bundle connector comprising a second arm that extends from the curved sidewall, the second arm spaced apart from the base portion to define a second notch therebetween, the second notch configured to receive the second strap therein.

Example 13. The mount of Example 1, wherein the bundle connector defines a first limiter portion that is configured to limit a lateral movement of the strap on the arm in a first direction.

Example 14. The mount of Example 13, wherein the bundle connector defines a second limiter portion that is configured to limit the lateral movement of the strap on the arm in a second direction, the second direction opposite the first direction.

Example 15. A mount comprising: a curved sidewall configured to guide an object from a first route to a second route along a route path; and a bundle connector configured to receive a strap to attach the object to the mount, the bundle connector comprising an arm that extends from the curved sidewall.

Example 16. The mount of Example 15, further comprising a base portion that includes a top side opposite a bottom side, the bottom side includes a mount portion configured to connect the base portion to a workpiece.

Example 17. The mount of Example 16, wherein the curved sidewall extends from the base portion and the bundle connector extends from the base portion.

Example 18. The mount of Example 16, wherein the arm is spaced apart from the base portion to define a notch therebetween, the notch configured to receive the strap therein.

Example 19. The mount of Example 16, further comprising a curved sidewall that extends from the base portion, the curved sidewall configured to guide the object from a first route to a second route along a route path.

Example 20. The mount of Example 16, wherein the mount portion further comprises at least one of: an adhesive portion configured to adhere to a mount surface of the workpiece to attach the mount portion of the base portion to the mount surface; or a fastener aperture defined through the base portion from the bottom side to the top side, the fastener aperture configured to receive a fastener therethrough to attach the base portion to the mount surface.

Example 21. A mount comprising a base portion, a curved sidewall, and a bundle connector. The base portion includes a top side opposite a bottom side, the bottom side includes a mount portion configured to connect the base portion to a workpiece. The curved sidewall that extends from the base portion and is configured to guide an elongated object from a first position to a second position along a route. The bundle connector extends from the base portion and is configured to receive a strap to attach the elongated object to the mount. The bundle connector includes an arm that extends from the curved sidewall, which is spaced apart from the base portion to define a notch configured to receive the strap therein.

In this description of aspects of angled anchor mounts, ordinal numbers such as "first" and "second" are used only to distinguish between different described objects, and have no limitation on a location, a sequence, a priority, a quantity, content, or the like of the described objects. For example, a "first limiter portion" is used as an example, and there may be one or more "limiter portions." Additionally, objects modified by different ordinal numbers may be the same or different objects. For example, if the described object is a "bundle connector," a "first bundle connector" and a "second bundle connector" may be the same or different bundle connectors.

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of" a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying figures and terms discussed herein may be indicative of one or more items or terms, and thus reference may be made interchangeably to single or plural forms of the items and terms in this written description.

In aspects, an angled anchor mount may include one or more of the features of the angled anchor mounts illustrated in the Drawings and described above. Although implementations of angled anchor mounts have been described in language specific to certain features and/or methods, the specific features and methods disclosed herein are example implementations. Further, although implementations for angled anchor mounts have been described in language specific to certain features and/or methods, the subject of the appended claims is not necessarily limited to the specific features or methods described. Rather, the specific features and methods are disclosed as example implementations of angled anchor mounts.

## Claims

1. A mount (200) comprising:
a bundle connector (250) configured to receive a strap (380) to attach an object (370) to the mount, the bundle connector comprising an arm (352) that defines a notch (354) configured to receive the strap therein or that extends from a curved sidewall (220), which curved sidewall is configured to guide the object from a first route (502) to a second route (504) along a route path.

2. The mount of claim 1, further comprising:
a base portion (210) that includes a top side (212) opposite a bottom side (214), the bottom side includes a mount portion (240) configured to connect the base portion to a workpiece (590).

3. The mount of any one of the preceding claims, wherein the arm is spaced apart from a base portion (210) to define the notch.

4. The mount of any one of the preceding claims, wherein the bundle connector extends from at least one of the base portion (210) or the curved sidewall (220).

5. The mount of any one of the claims 2 to 4, wherein the base portion further comprises:
a channel (216) defined in the top side, the channel configured to guide the strap under the arm of the bundle connector.

6. The mount of any one of the claims 2 to 5, wherein the mount portion further comprises at least one of:
an adhesive portion (242) configured to adhere to a mount surface (592) of the workpiece to attach the mount portion of the base portion to the mount surface; or
a fastener aperture (244) defined through the base portion from the bottom side to the top side, the fastener aperture configured to receive a fastener (296) therethrough to attach the base portion to the mount surface.

7. The mount of any one of the preceding claims, wherein
the curved sidewall (220) extends from a base portion (210).

8. The mount of claim 7, wherein the base portion defines a base plane and the curved sidewall extends generally orthogonally to the base plane.

9. The mount of claim 7 or 8, wherein the arm extends from the curved sidewall, and the arm is configured to attach to the object via the strap.

10. The mount of claim 7 or 8 or 9, wherein the arm extends from an end of the curved sidewall.

11. The mount of any one of claims 7 to 10, further comprising:
a bundle retainer (270), wherein the bundle retainer and the curved sidewall define a cradle (262) therebetween, the cradle configured to receive the object, and the bundle retainer configured to retain the object in the cradle.

12. The mount of any one of claims 7 to 11, wherein the bundle connector is a first bundle connector, the strap is a first strap, and the mount further comprises:
a second bundle connector (450) that extends from the base portion, the second bundle connector configured to receive a second strap (480) to attach the object to the mount, the second bundle connector comprising a second arm (452) that extends from the curved sidewall, the second arm spaced apart from the base portion to define a second notch (454) therebetween, the second notch configured to receive the second strap therein.

13. The mount of any one of the preceding claims, wherein the bundle connector defines a first limiter portion (356) that is configured to limit a lateral movement of the strap on the arm in a first direction (D1).

14. The mount of claim 13, wherein the bundle connector defines a second limiter portion (358) that is configured to limit the lateral movement of the strap on the arm in a second direction (D2), the second direction opposite the first direction.

15. The mount of any one of the preceding claims, wherein the arm defines the notch (354) configured to receive the strap therein and extends from the curved sidewall (220).:
